# EUROPEAN PATENT APPLICATION

(11) **EP 4 593 316 A1**
(43) Date of publication of application: **30.07.2025**
(21) Application number: 23890698.6
(22) Date of filing: 10.11.2023
(51) Int. Cl.: H04L 5/00

(54) **SIGNAL SENDING METHOD AND APPARATUS**

(30) Priority: 18.11.2022 CN 202211445839; 26.12.2022 CN 202211675954
(71) Applicant: Huawei Technologies Co., Ltd., Shenzhen, Guangdong 518129 (CN)
(72) Inventor: DUAN, Ruiyang, Shenzhen, Guangdong 518129 (CN); LI, Xueru, Shenzhen, Guangdong 518129 (CN)
(74) Representative: Maiwald GmbH
(86) International application number: PCT/CN2023/130954
(87) International publication number: WO 2024/104264

(57) **Abstract**

This application provides a signal sending method and an apparatus, to reduce a bandwidth occupied by a frequency hopping overlap area, and increase an actually increased bandwidth of frequency hopping, thereby reducing a quantity of times of frequency hopping and a sensing delay. The method includes: A first communication device generates and sends a first signal. The first signal is mapped to respective frequency domain subbands of N time units, and a frequency domain subband of each time unit includes a first-type frequency domain area and at least one second-type frequency domain area. At least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1. The first signal is mapped to the first-type frequency domain area by using a first comb, and is mapped to the second-type frequency domain area by using a second comb, and the second comb is less than the first comb.

## Description

This application claims priority to Chinese Patent Application No. 202211445839.7, filed with the China National Intellectual Property Administration on November 18, 2022 and entitled "FREQUENCY HOPPING SENSING METHOD AND SENSING DEVICE", and Chinese Patent Application No. 202211675954.3, filed with the China National Intellectual Property Administration on December 26, 2022 and entitled "SIGNAL SENDING METHOD AND APPARATUS", which are incorporated herein by reference in their entireties.

### TECHNICAL FIELD

Embodiments of this application relate to the communication field, and in particular, to a signal sending method and an apparatus.

### BACKGROUND

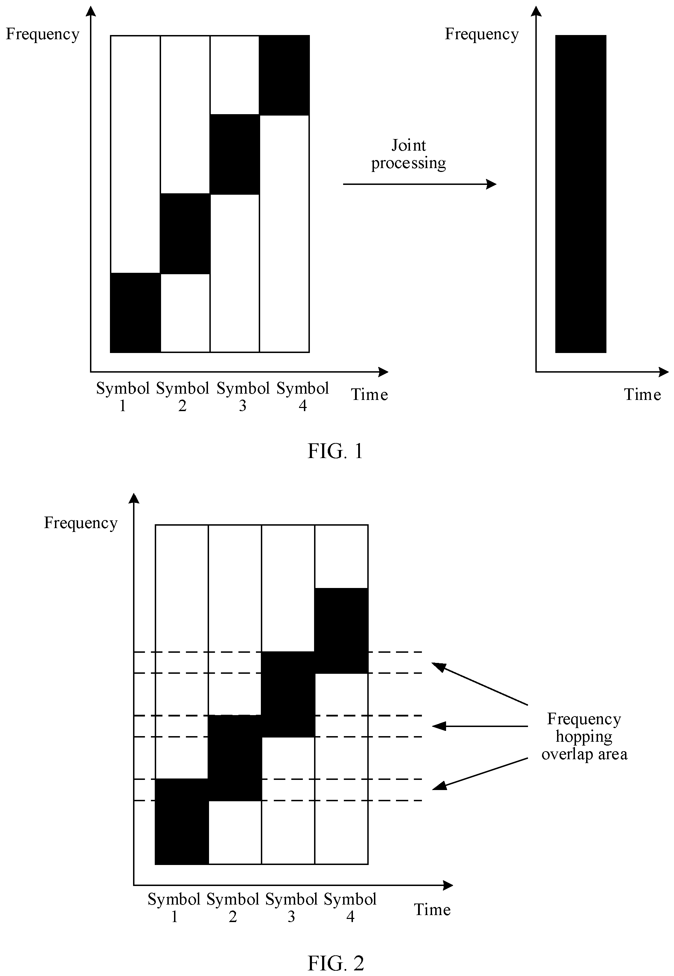

To achieve a high ranging resolution, a sensing signal may be sent in a frequency hopping manner. In this manner, for example, as shown in FIG. 1, a sensing device may send sensing signals with different center frequencies but continuous spectrums in a plurality of consecutive symbols. However, this frequency hopping manner introduces a random phase error between adjacent subcarriers, affecting ranging precision.

To eliminate the random phase error, as shown in FIG. 2, the sensing device may keep some subcarriers overlapped during each frequency hopping. In subsequent joint processing, some overlapped subcarriers are used to estimate and compensate for the random phase error.

However, in a scenario in which the sensing device uses multi-comb mapping, some overlapped subcarriers occupy an excessively large equivalent bandwidth. As a result, an actually increased bandwidth during each frequency hopping decreases, a quantity of times of frequency hopping increases, and a sensing delay increases.

### SUMMARY

This application provides a signal sending method and an apparatus, to reduce a bandwidth occupied by a frequency hopping overlap area, and increase an actually increased bandwidth of frequency hopping, thereby reducing a quantity of times of frequency hopping and a delay.

According to a first aspect, a signal sending method is provided. The method may be performed by a first communication device, or may be performed by a component of the first communication device, for example, a processor, a chip, or a chip system of the first communication device, or may be implemented by a logic module or software that can implement all or a part of functions of the first communication device. The method includes:
generating and sending a first signal. The first signal is mapped to respective frequency domain subbands of N time units, and a frequency domain subband of each time unit includes a first-type frequency domain area and at least one second-type frequency domain area. At least one second-type frequency domain area in a frequency domain subband of an i^{th} time unit in the N time units overlaps at least one second-type frequency domain area in a frequency domain subband of an (i+1)^{th} time unit, N is a positive integer greater than 1, and i is a positive integer from 1 to N-1. In addition, the first signal is mapped to the first-type frequency domain area by using a first comb, and is mapped to the second-type frequency domain area by using a second comb, and the second comb is less than the first comb.

Based on this solution, the first communication device sends a signal on frequency domain subbands of a plurality of time units, so that a receiver can equate signals mapped to the frequency domain subbands of the plurality of time units to a received signal with a large bandwidth. Compared with mapping a signal with a large bandwidth to a frequency domain subband of one time unit, this can reduce a requirement on a sampling rate of an ADC of a transmitter, and can adapt to a signal sending capability of a device such as a RedCap UE. In addition, a large comb is used for mapping in a first-type frequency domain area in a frequency domain subband of each time unit, and a small comb is used for mapping in an overlap area (that is, a second-type frequency domain area). Compared with using a same comb for mapping in the first-type frequency domain area and the second-type frequency domain area, this can reduce a bandwidth occupied by the overlap area, and increase an actually increased bandwidth of frequency hopping, thereby reducing a quantity of times of frequency hopping and a service (for example, sensing or positioning) delay.

In a possible design, the method further includes: receiving a second signal, and processing the second signal based on the first signal. The second signal is an echo signal of the first signal.

According to a second aspect, a signal processing method is provided. The method may be performed by a second communication device, or may be performed by a component of the second communication device, for example, a processor, a chip, or a chip system of the second communication device, or may be implemented by a logic module or software that can implement all or a part of functions of the second communication device. The method includes:
receiving a third signal, and processing the third signal based on a first signal. The third signal is a signal obtained after the first signal is reflected by a target. The first signal is mapped to respective frequency domain subbands of N time units, and a frequency domain subband of each time unit includes a first-type frequency domain area and at least one second-type frequency domain area. At least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1. In addition, the first signal is mapped to the first-type frequency domain area by using a first comb, and is mapped to the second-type frequency domain area by using a second comb, and the second comb is less than the first comb.

Based on this solution, the first signal is mapped to frequency domain subbands of a plurality of time units, so that the second communication device can equate signals mapped to the frequency domain subbands of the plurality of time units to a received signal with a large bandwidth. Compared with mapping a signal with a large bandwidth to a frequency domain subband of one time unit, this can reduce a requirement on a sampling rate of an ADC of a transmitter, and can adapt to a signal sending capability of a device such as a RedCap UE. In addition, a large comb is used for mapping in a first-type frequency domain area in a frequency domain subband of each time unit, and a small comb is used for mapping in an overlap area (that is, a second-type frequency domain area). Compared with using a same comb for mapping in the first-type frequency domain area and the second-type frequency domain area, this can reduce a bandwidth occupied by the overlap area, and increase an actually increased bandwidth of frequency hopping, thereby reducing a quantity of times of frequency hopping and a service (for example, sensing or positioning) delay.

With reference to the first aspect or the second aspect, in a possible design, the frequency domain subband of each time unit includes a plurality of frequency domain units, and the frequency domain subbands of the N time units meet at least one of the following plurality of relationships: belonging to a same carrier; belonging to a same bandwidth part BWP of a same carrier; belonging to a same resource pool of a same carrier; belonging to adjacent BWPs of a same carrier; belonging to adjacent resource pools of a same carrier; or belonging to different carriers of in-band carrier aggregation.

With reference to the first aspect or the second aspect, in a possible design, a signal that is in the first signal and that is mapped to the frequency domain subband of the i^{th} time unit is generated based on a sequence whose length is M. In the sequence whose length is M, M1 elements are mapped to the first-type frequency domain area, and remaining M-M1 elements are mapped to the second-type frequency domain area. The M-M1 elements are obtained through modulation based on a base sequence and an orthogonal cover code whose length is L, and L is a positive integer.

Based on the possible design, the first communication apparatus uses an OCC code to modulate an element mapped to the second-type frequency domain area, so that when different transmitter apparatuses perform comb frequency division multiplexing on a frequency domain subband of a same time unit group, interference between transmitter apparatuses in the second-type frequency domain area can be reduced, thereby reducing impact of the interference between the transmitter apparatuses on random phase error estimation, and improving accuracy of random phase error estimation.

With reference to the first aspect or the second aspect, in a possible design, a quantity of frequency domain units included in the second-type frequency domain area is a positive integer multiple of L, and/or M-M1 is a positive integer multiple of L.

With reference to the first aspect or the second aspect, in a possible design, L is a positive integer greater than or equal to the first comb.

With reference to the first aspect or the second aspect, in a possible design, a value of N and/or the quantity of frequency domain units included in the second-type frequency domain area are/is preset values/a preset value.

With reference to the first aspect or the second aspect, in a possible design, the quantity of frequency domain units included in the second-type frequency domain area is determined based on a signal-to-noise ratio SNR required for random phase error estimation.

Based on the possible design, the quantity of frequency domain units included in the second-type frequency domain area may be flexibly adjusted based on an actual requirement. Compared with that the second-type frequency domain area includes a fixed quantity of frequency domain units, this is more flexible. In addition, when the SNR required for random phase error estimation is low, the second-type frequency domain area may include a small quantity of frequency domain units. Compared with that the second-type frequency domain area includes a fixed large quantity of frequency domain units, this can further reduce a bandwidth occupied by the second-type frequency domain area, and increase an actually increased bandwidth of frequency hopping, thereby reducing a quantity of times of frequency hopping and a sensing (or positioning) delay.

With reference to the first aspect or the second aspect, in a possible design, the time unit is a symbol, or the time unit is a slot.

With reference to the first aspect or the second aspect, in a possible design, the first communication device is a terminal device or an access network device.

According to a third aspect, a communication apparatus is provided, to implement the foregoing methods. The communication apparatus may be the first communication device in the first aspect, or an apparatus included in the first communication device, for example, a chip or a chip system. Alternatively, the communication apparatus may be the second communication device in the second aspect, or an apparatus included in the second communication device, for example, a chip or a chip system. The communication apparatus includes a corresponding module, unit, or means (means) for implementing the foregoing methods. The module, unit, or means may be implemented by hardware, software, or hardware executing corresponding software. The hardware or software includes one or more modules or units corresponding to the foregoing functions.

In some possible designs, the communication apparatus may include a processing module and a transceiver module. The transceiver module may also be referred to as a transceiver unit, and is configured to implement a sending function and/or a receiving function in any one of the foregoing aspects and the possible implementations thereof. The transceiver module may include a transceiver circuit, a transceiver machine, a transceiver, or a communication interface. The processing module may be configured to implement a processing function in any one of the foregoing aspects and the possible implementations thereof.

In some possible designs, the transceiver module includes a sending module and a receiving module, which are respectively configured to implement a sending function and a receiving function in any one of the foregoing aspects and the possible implementations thereof.

According to a fourth aspect, a communication apparatus is provided, including a processor and a memory. The memory is configured to store computer instructions. When the processor executes the instructions, the communication apparatus is enabled to perform the method in any one of the foregoing aspects. The communication apparatus may be the first communication device in the first aspect, or an apparatus included in the first communication device, for example, a chip or a chip system. Alternatively, the communication apparatus may be the second communication device in the second aspect, or an apparatus included in the second communication device, for example, a chip or a chip system.

According to a fifth aspect, a communication apparatus is provided, including a processor and a communication interface. The communication interface is configured to communicate with a module outside the communication apparatus. The processor is configured to execute a computer program or instructions, to enable the communication apparatus to perform the method in any one of the foregoing aspects. The communication apparatus may be the first communication device in the first aspect, or an apparatus included in the first communication device, for example, a chip or a chip system. Alternatively, the communication apparatus may be the second communication device in the second aspect, or an apparatus included in the second communication device, for example, a chip or a chip system.

According to a sixth aspect, a communication apparatus is provided, including an interface circuit and a processor. The interface circuit is a code/data read/write interface circuit, and the interface circuit is configured to receive computer-executable instructions (the computer-executable instructions are stored in a memory, and may be read from the memory directly or via another component) and transmit the computer-executable instructions to the processor. The processor is configured to execute the computer-executable instructions, to enable the communication apparatus to perform the method in any one of the foregoing aspects. The communication apparatus may be the first communication device in the first aspect, or an apparatus included in the first communication device, for example, a chip or a chip system. Alternatively, the communication apparatus may be the second communication device in the second aspect, or an apparatus included in the second communication device, for example, a chip or a chip system.

According to a seventh aspect, a communication apparatus is provided, including at least one processor. The processor is configured to execute a computer program or instructions, to enable the communication apparatus to perform the method in any one of the foregoing aspects. The communication apparatus may be the first communication device in the first aspect, or an apparatus included in the first communication device, for example, a chip or a chip system. Alternatively, the communication apparatus may be the second communication device in the second aspect, or an apparatus included in the second communication device, for example, a chip or a chip system.

In some possible designs, the communication apparatus includes a memory, and the memory is configured to store necessary program instructions and data. The memory may be coupled to the processor, or may be independent of the processor.

In some possible designs, the communication apparatus may be a chip or a chip system. When the apparatus is a chip system, the apparatus may include a chip, or may include a chip and another discrete component.

According to an eighth aspect, a computer-readable storage medium is provided. The computer-readable storage medium stores instructions. When the instructions are run on a communication apparatus, the communication apparatus is enabled to perform the method in any one of the foregoing aspects.

According to a ninth aspect, a computer program product including instructions is provided. When the computer program product runs on a communication apparatus, the communication apparatus is enabled to perform the method in any one of the foregoing aspects.

It may be understood that when the communication apparatus provided in any one of the third aspect to the ninth aspect is a chip, the sending action/function may be understood as outputting information, and the receiving action/function may be understood as inputting information.

For technical effects brought by any design manner of the third aspect to the ninth aspect, refer to technical effects brought by different design manners of the first aspect or the second aspect. Details are not described herein again.

### BRIEF DESCRIPTION OF DRAWINGS

FIG. 1 is a diagram of a frequency hopping manner according to this application;
FIG. 2 is a diagram of another frequency hopping manner according to this application;
FIG. 3 is a diagram of a random phase error introduced by a frequency hopping manner according to this application;
FIG. 4 is a diagram of bandwidth occupation when frequency hopping is performed by using different combs according to this application;
FIG. 5 is a diagram of a structure of a communication system according to this application;
FIG. 6 is a diagram of a structure of another communication system according to this application;
FIG. 7a is a diagram of a structure of a communication apparatus according to this application;
FIG. 7b is a diagram of a structure of another communication apparatus according to this application;
FIG. 7c is a diagram of a structure of still another communication apparatus according to this application;
FIG. 8 is a schematic flowchart of a signal sending method according to this application;
FIG. 9 is a diagram of a first-type frequency domain area and a second-type frequency domain area according to this application;
FIG. 10 is a diagram of a frequency hopping manner when different combs are used for mapping in a first-type frequency domain area and a second-type frequency domain area according to this application;
FIG. 11 is a diagram of a location relationship between frequency domain subbands of a plurality of time units according to this application;
FIG. 12 is a diagram of comb frequency division multiplexing on a frequency domain subband of a time unit according to this application;
FIG. 13 is a diagram of OCC code modulation according to this application; and
FIG. 14 is a diagram of a structure of yet another communication apparatus according to this application.

### DESCRIPTION OF EMBODIMENTS

Unless otherwise specified, "/" in descriptions of this application represents an "or" relationship between associated objects. For example, A/B may represent A or B. In this application, "and/or" merely describes an association relationship between associated objects, and represents that three relationships may exist. For example, A and/or B may represent the following three cases: Only A exists, both A and B exist, and only B exists. A and B may be singular or plural.

In addition, in descriptions of this application, unless otherwise specified, "a plurality of" means two or more than two, and "at least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, to clearly describe technical solutions in embodiments of this application, words such as "first" and "second" are used in embodiments of this application to distinguish between same items or similar items that provide basically same functions or effects. A person skilled in the art may understand that the words such as "first" and "second" do not limit a quantity or an execution order, nor indicate a definite difference.

In embodiments of this application, the word such as "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner for ease of understanding.

It may be understood that, an "embodiment" used throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any appropriate manner. It may be understood that sequence numbers of processes do not mean a specific execution order in embodiments of this application. An execution order of the processes should be determined based on functions and internal logic of the processes, and should not be construed as any limitation on implementation processes of embodiments of this application.

It may be understood that, in this application, both "when" and "if" mean that corresponding processing is performed in an objective situation, which are not intended to limit time, nor require a determining action during implementation, or mean any other limitation.

It may be understood that, some optional features in embodiments of this application may be independently implemented in some scenarios without depending on another feature, for example, a solution on which the features are currently based, to resolve a corresponding technical problem and achieve a corresponding effect; or may be combined with another feature based on a requirement in some scenarios. Correspondingly, an apparatus provided in embodiments of this application may correspondingly implement these features or functions. Details are not described herein.

In this application, unless otherwise specified, for same or similar parts of embodiments, refer to each other. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment. The following implementations of this application do not constitute a limitation on the protection scope of this application.

Currently, a wireless sensing technology is widely used in sensing, radar, or communication sensing integration systems and the like. A principle of wireless sensing may be briefly described as follows: A transmitter sends a sensing signal to a specific space. An echo signal is formed after the sensing signal is reflected by a target. A receiver receives the echo signal, and performs comparison and analysis on the echo signal and the sensing signal, to obtain information such as a distance, a speed, and an orientation of the target.

Generally, a ranging resolution of the sensing is directly proportional to a bandwidth of the sensing signal, that is, Δ*R = c*/2*B,* where Δ*R* is the ranging resolution, *c* is a speed of light, and *B* is the bandwidth of the sensing signal. For example, to achieve a ranging resolution of 0.3 meter (m), the bandwidth of the sensing signal needs to be greater than or equal to 500 megahertz (megahertz, MHz), which imposes a high requirement on a sampling rate of an analog-to-digital converter (analog-to-digital converter, ADC) of the transmitter. Therefore, to avoid loss of ranging precision, the sampling rate of the ADC of the transmitter needs to reach at least 500 MHz. In addition, in a scenario in which the transmitter device is a reduced capability (reduced capability, RedCap) user equipment (user equipment, UE), because a bandwidth for sending a signal by the RedCap UE is limited, it is difficult to implement high-precision ranging in this scenario.

To reduce the requirement on the sampling rate of the ADC of the transmitter and support the RedCap UE in implementing high-precision ranging, the sensing signal may be sent in a frequency hopping manner.

For example, with reference to FIG. 1, in the frequency hopping manner, a transmitter may send sensing signals with different center frequencies but continuous spectrums in a plurality of symbols. The plurality of symbols may be consecutive or inconsecutive. In FIG. 1, an example that the transmitter sends sensing signals in four consecutive symbols is used for description.

For example, that the transmitter sends sensing signals with different center frequencies but continuous spectrums in two symbols may be understood as one time of frequency hopping. For example, with reference to FIG. 1, that the transmitter sends sensing signals with different center frequencies but continuous spectrums in a symbol 1 and a symbol 2 may be understood as one time of frequency hopping, and that the transmitter sends sensing signals with different center frequencies but continuous spectrums in the symbol 2 and a symbol 3 may be understood as one time of frequency hopping. By analogy, if the transmitter sends sensing signals with different center frequencies but continuous spectrums in N symbols, the process may include N-1 times of frequency hopping.

Based on the frequency hopping manner, because a sensing signal in a single symbol occupies a small bandwidth, a requirement on the sampling rate of the ADC of the transmitter is low, and a signal sending capability of the RedCap UE can be adapted to. In addition, because the spectrums in the plurality of symbols are continuous, the sensing signals sent in the plurality of symbols may be jointly processed at a receiver as an equivalent sensing signal with a large bandwidth, to implement high-precision ranging.

However, when the sensing signal is sent in the frequency hopping manner, during each frequency hopping, frequency-sensitive components, such as a phase-locked loop (phase-locked loop, PLL), a low noise amplifier (low noise amplifier, LNA), and a power amplifier (power amplifier, PA), in a radio frequency circuit of the transmitter introduce a random phase error within a range [0,2π] between adjacent subcarriers. The random phase error affects ranging precision and cannot be ignored.

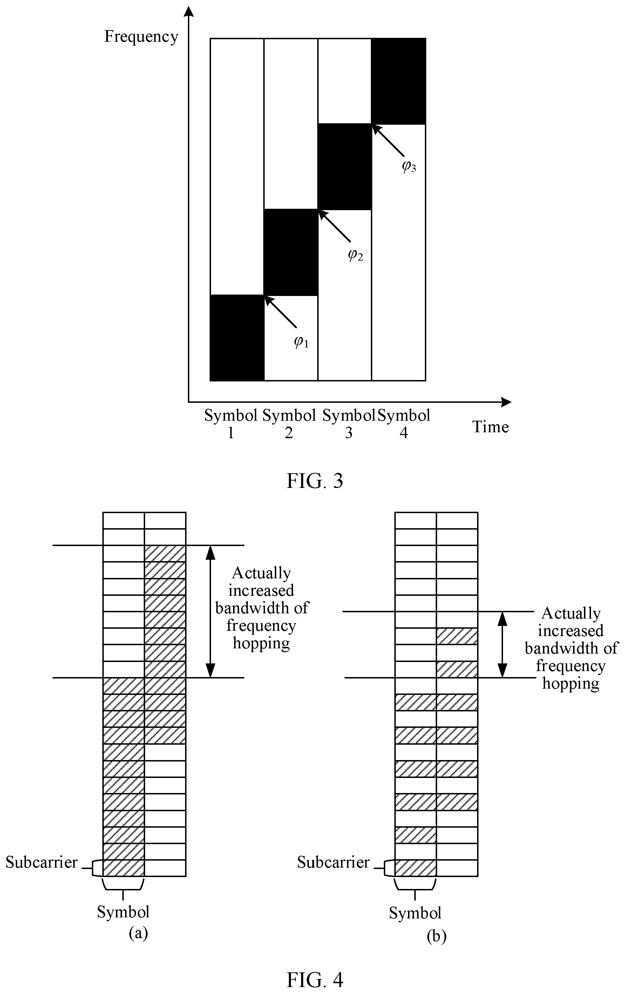

For example, as shown in FIG. 3, random phase errors *φ*₁, *φ*₂*,* and *φ*₃ exist between adjacent subcarriers in a symbol 1 and a symbol 2, between adjacent subcarriers in the symbol 2 and a symbol 3, and between adjacent subcarriers in the symbol 3 and a symbol 4, respectively.

To eliminate impact caused by the random phase error, the transmitter overlaps a part of subcarriers (referred to as a frequency hopping overlap area) during each frequency hopping. For example, as shown in FIG. 2, a part of subcarriers overlap in the symbol 1 and the symbol 2. Similarly, a part of subcarriers overlap in the symbol 2 and the symbol 3, and in the symbol 3 and the symbol 4. Subsequently, during joint processing, the receiver may estimate and compensate for the random phase error by using the part of overlapping subcarriers, to reduce impact of the random phase error on ranging precision.

However, when the transmitter uses multi-comb mapping, the frequency hopping overlap part occupies an excessively large equivalent bandwidth. As a result, an actually increased bandwidth (which may also be referred to as an effective bandwidth) during each frequency hopping decreases, a quantity of times of frequency hopping increases, and a sensing delay increases.

The multi-comb mapping may be understood as discontinuous mapping. For example, when the transmitter performs mapping based on a comb 4, subcarriers that may be selected by the transmitter are subcarriers numbered 0, 4, 8, 12, 16, ..., or 1, 5, 9, 13, 17, ..., or 2, 6, 10, 14, 18, ..., or 3, 7, 11, 15, 19 .... The multi-comb mapping is used to enable a short sensing sequence to occupy a large bandwidth. In addition, a plurality of transmitters may use different subcarriers to implement multiplexing of a same bandwidth. Particularly, continuous mapping may also be understood as mapping based on a comb 1, or in other words, mapping based on a comb 1 may also be understood as continuous mapping.

Generally, a larger quantity of subcarriers included in the frequency hopping overlap area indicate that a signal-to-noise ratio during random phase error estimation is larger, and an estimated random phase error is more accurate. Therefore, to ensure accuracy of phase estimation, the frequency hopping overlap area is usually required to include a specific quantity of subcarriers.

For example, it is assumed that the frequency hopping overlap area is required to include at least four subcarriers, and a bandwidth of a sensing signal in one frequency hopping process is 12 subcarriers. As shown in (a) in FIG. 4, when the transmitter performs mapping based on a comb 1, an actually increased bandwidth after one time of frequency hopping is a width of eight subcarriers. As shown in (b) in FIG. 4, when the transmitter performs mapping based on a comb 2, the frequency hopping overlap area actually occupies eight subcarriers, and an actually increased bandwidth after one time of frequency hopping is a width of four subcarriers. Therefore, compared with the mapping based on the comb 1, an actually increased bandwidth of each frequency hopping is reduced by half, which increases a quantity of times of frequency hopping and a sensing delay.

Based on this, this application provides a signal sending method, where a small comb size may be used for mapping in a frequency hopping overlap area, and a large comb size may be used for mapping in a non-overlap area, to reduce a bandwidth occupied by the frequency hopping overlap area, and increase an actually increased bandwidth of frequency hopping, thereby reducing a quantity of times of frequency hopping and a sensing delay.

The technical solution in embodiments of this application may be applied to various communication systems. The communication system may be a 3rd generation partnership project (3rd generation partnership project, 3GPP) communication system, for example, a 5th generation (5th generation, 5G) or 6th generation (sixth generation, 6G) mobile communication system, a sidelink (sidelink, SL) system, an ultra-wideband (ultra-wideband, UWB) system, a vehicle-to-everything (vehicle-to-everything, V2X) system, a device-to-device (device-to-device, D2D) communication system, a machine-to-machine (machine-to-machine, M2M) communication system, an internet of things (internet of things, IoT), and other next-generation communication systems. Alternatively, the communication system may be a non-3GPP communication system, for example, a wireless local area network (wireless local area network, WLAN) system such as Wi-Fi. This is not limited.

The technical solution in embodiments of this application may be applied to various communication scenarios, for example, may be applied to one or more of the following communication scenarios: smart home, D2D, V2X, IoT, and other communication scenarios.

The foregoing communication systems and the communication scenarios applicable to this application are merely examples for description, and communication systems and the communication scenarios applicable to this application are not limited thereto. This is stated herein once for all, and is not repeated below.

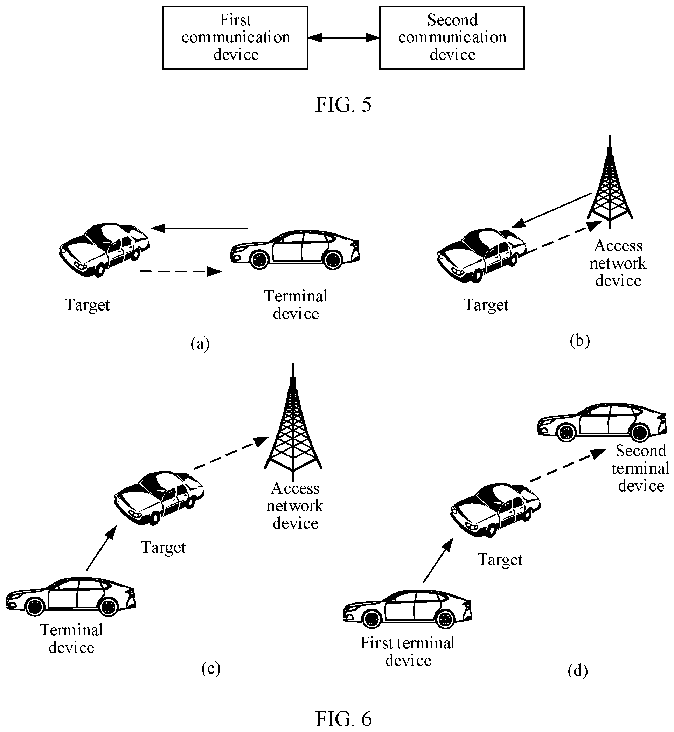

FIG. 5 shows a communication system according to an embodiment of this application. The communication system includes a first communication device and a second communication device.

In some embodiments, the first communication device is a signal transmitter, and the second communication device is a signal receiver. Optionally, the first communication device and the second communication device may be a same communication device. In this case, it may be understood as a monostatic sensing scenario. Alternatively, the first communication device and the second communication device may be different communication devices. In this case, it may be understood as a bistatic sensing scenario.

For example, in the monostatic scenario, as shown in (a) in FIG. 6, the first communication device may be a terminal device; or as shown in (b) in FIG. 6, the first communication device may be an access network device. In the bistatic scenario, as shown in (c) in FIG. 6, the first communication device may be a terminal device, and the second communication device may be an access network device; or as shown in (d) in FIG. 6, the first communication device may be a first terminal device, and the second communication device may be a second terminal device.

Optionally, this application does not limit the first communication device to a terminal device or an access network device. The first communication device may alternatively be another type of device, for example, a core network device. This is not specifically limited.

Optionally, in addition to the first communication device, the communication system may further include at least one other sending device, and the at least one other sending device and the first communication device may perform comb frequency division multiplexing. For example, the sending device may be a terminal device or an access network device. The sending device may perform monostatic sensing and bistatic sensing. This is not specifically limited in this application.

Optionally, the access network device is a device that connects a terminal device to a wireless network, and may be an evolved NodeB (evolved NodeB, eNB or eNodeB) in a long term evolution (long term evolution, LTE) system or an LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP); or may be a base station in a future evolved public land mobile network (public land mobile network, PLMN); or may be a broadband network gateway (broadband network gateway, BNG), an aggregation switch, or a non-3GPP access device; or may be a radio controller in a cloud radio access network (cloud radio access network, CRAN); or may be an access point (access point, AP) in a Wi-Fi system; or may be a wireless relay node or a wireless backhaul node; or may be a device implementing a base station function in IoT, a device implementing a base station function in V2X, a device implementing a base station function in D2D, or a device implementing a base station function in M2M. This is not specifically limited in this embodiment of this application.

Optionally, the terminal device may be a user-side device having a wireless transceiver function. The terminal device may also be referred to as a user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be, for example, a wireless terminal in IoT, V2X, D2D, M2M, a 5G network, or a future evolved PLMN. The terminal device may be deployed on land, including indoor, outdoor, handheld, or in-vehicle forms, or may be deployed on a water surface (such as a ship), or may be deployed in air (for example, on an airplane, a balloon, or a satellite).

For example, the terminal device may be a RedCap UE, a narrowband terminal, an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, or an in-vehicle device, a wearable device (which may also be referred to as a wearable smart device), a tablet computer or a computer with a wireless transceiver function, a virtual reality (virtual reality, VR) terminal, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), an in-vehicle terminal, a vehicle with a vehicle-to-vehicle (vehicle-to-vehicle, V2V) communication capability, an intelligent connected vehicle, or an uncrewed aerial vehicle with a UAV-to-UAV (UAV-to-UAV, U2U) communication capability. The terminal may be mobile or fixed. This is not specifically limited in this application.

A related function of the first communication device or the second communication device in this application may be implemented by one device, or may be jointly implemented by a plurality of devices, or may be implemented by one or more functional modules in one device, or may be implemented by one or more chips, or may be implemented by a system-on-chip (system-on-chip, SOC) or a chip system. The chip system may include a chip, or may include a chip and another discrete component. This is not specifically limited in this embodiment of this application.

It may be understood that the function may be a network element in a hardware device, a software function running on dedicated hardware, a combination of hardware and software, or a virtualization function instantiated on a platform (for example, a cloud platform).

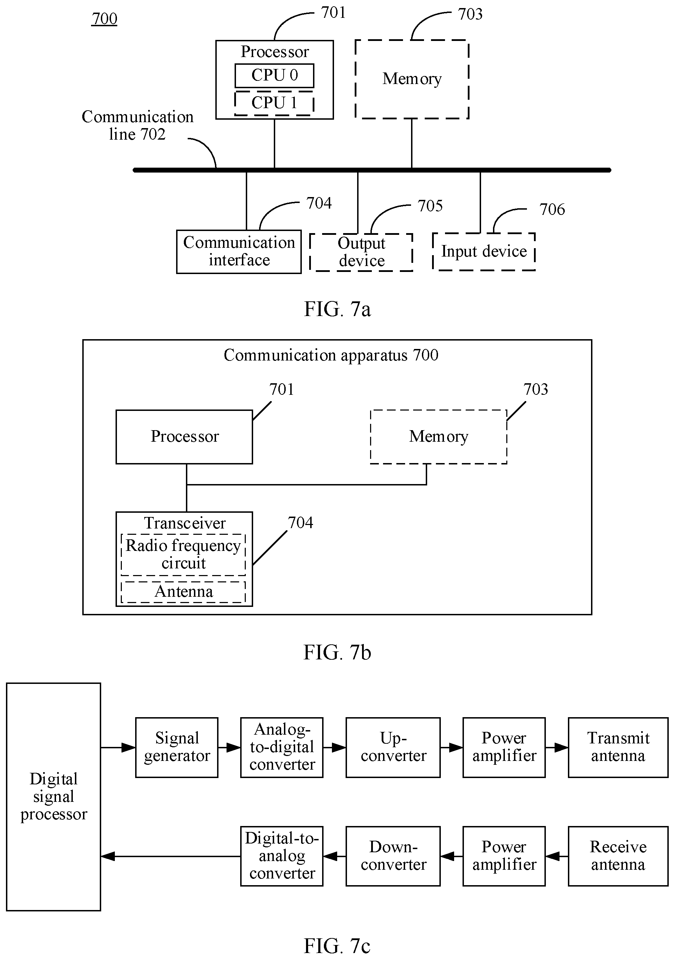

For example, the related function of the first communication device or the second communication device in this application may be implemented by using a communication apparatus 700 in FIG. 7a. FIG. 7a is a diagram of a structure of a communication apparatus 700 according to an embodiment of this application. The communication apparatus 700 includes one or more processors 701 and at least one communication interface 704 (FIG. 7a merely shows an example of including one communication interface 704 and one processor 701 for description), and optionally, may further include a communication line 702 and a memory 703.

The processor 701 may be a general-purpose central processing unit (central processing unit, CPU), a microprocessor, an application-specific integrated circuit (application-specific integrated circuit, ASIC), or one or more integrated circuits configured to control program execution of the solution in this application.

During specific implementation, in an embodiment, the processor 701 may include one or more CPUs, for example, a CPU 0 and a CPU 1 in FIG. 7a.

During specific implementation, in an embodiment, the processor 701 may be a single-core (single-core) processor, or may be a multi-core (multi-core) processor. The processor herein may include but is not limited to at least one of the following computing devices that run software: a central processing unit (central processing unit, CPU), a microprocessor, a digital signal processor (DSP), a microcontroller (microcontroller unit, MCU), or an artificial intelligence processor. Each computing device may include one or more cores for executing software instructions to perform an operation or processing.

The communication line 702 may be used for communication between different components included in the communication apparatus 700.

The communication interface 704 may be configured to communicate with another device or a communication network. The communication interface 704 may be an apparatus such as a transceiver or a transceiver machine, or may be an input/output interface. Alternatively, the communication interface 704 may be a transceiver circuit located in the processor 701, to implement signal input and signal output of the processor.

The memory 703 may be an apparatus having a storage function, for example, may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, and a blue-ray disc, or the like), a magnetic disk storage medium or another magnetic storage device, or any other medium that can be used to carry or store expected program code in an instruction or data structure form and that can be accessed by a computer. The memory may exist independently, and is connected to the processor by using the communication line 702. Alternatively, the memory may be integrated with the processor.

Optionally, the memory 703 may be configured to store computer-executable instructions for executing the solution of this application, and the execution is controlled by the processor 701, to implement the method provided in embodiments of this application.

Alternatively, optionally, in embodiments of this application, the processor 701 may perform a processing related function in the method provided in the following embodiment of this application, and the communication interface 704 is responsible for a function of communicating with another device or communication network in the method provided in the following embodiment of this application. This is not specifically limited in embodiments of this application.

Optionally, the computer-executable instructions in this embodiment of this application may also be referred to as application program code. This is not specifically limited in this embodiment of this application.

During specific implementation, in an embodiment, the communication apparatus 700 may further include an output device 705 and an input device 706. The output device 705 communicates with the processor 701, and may display information in a plurality of manners. For example, the output device 705 may be a liquid crystal display (liquid crystal display, LCD), a light emitting diode (light emitting diode, LED) display device, a cathode ray tube (cathode ray tube, CRT) display device, or a projector (projector). The input device 706 communicates with the processor 701, and may receive input of a user in a plurality of manners. For example, the input device 706 may be a mouse, a keyboard, a touchscreen device, or a sensor device.

For example, the communication interface 704 is a transceiver. FIG. 7b is a diagram of a structure of another communication apparatus 700 according to an embodiment of this application. The communication apparatus 700 includes a processor 701 and a transceiver 704. FIG. 7b shows only main components of the communication apparatus 700. In addition to the processor 701 and the transceiver 704, the communication apparatus may further include a memory 703 and an input/output apparatus (not shown in the figure).

The processor 701 is mainly configured to: process a communication protocol and communication data, control the entire communication apparatus, execute a software program, and process data of the software program. The memory 703 is mainly configured to store the software program and data. The transceiver 704 may include a radio frequency circuit and an antenna. The radio frequency circuit is mainly configured to perform conversion between a baseband signal and a radio frequency signal and process the radio frequency signal. The antenna is mainly configured to receive and send radio frequency signals in an electromagnetic wave form.

After the communication apparatus is powered on, the processor 701 may read the software program in the memory 703, interpret and execute instructions of the software program, and process data of the software program. When data needs to be sent wirelessly, the processor 701 performs baseband processing on the to-be-sent data, and then outputs a baseband signal to the radio frequency circuit. The radio frequency circuit performs radio frequency processing on the baseband signal, and then sends a radio frequency signal in an electromagnetic wave form by using the antenna. When data is sent to the communication apparatus, the radio frequency circuit receives a radio frequency signal by using the antenna, converts the radio frequency signal into a baseband signal, and outputs the baseband signal to the processor 701. The processor 701 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

For example, as shown in FIG. 7c, the processor 701 in FIG. 7b may include a digital signal processor, a signal generator, and an analog-to-digital converter. A radio frequency circuit configured to send a signal may include an up-converter and a power amplifier, and a radio frequency circuit configured to receive a signal may include a down-converter and a power amplifier. The antenna may include a transmit antenna and a receive antenna.

In a possible implementation, the signal generator may be configured to generate a signal. The up-converter and the down-converter are respectively configured to modulate a signal to a high-frequency carrier and demodulate a signal from a high-frequency carrier. The power amplifier is configured to amplify power of a signal. The analog-to-digital converter is configured to convert a digital signal and an analog signal. The digital signal processor is configured to generate a sensing sequence and perform an auto-correlation operation and/or a cross-correlation operation.

It should be noted that the composition structure shown in FIG. 7a, FIG. 7b, or FIG. 7c does not constitute any limitation on the communication apparatus. In addition to the components shown in FIG. 7a, FIG. 7b, or FIG. 7c, the communication apparatus may include more or fewer components than those shown in the figure, or combine some components, or have different component arrangements. The components shown in the figure may be implemented by hardware, software, or a combination of software and hardware.

The following describes, with reference to accompanying drawings, the method provided in this application. In embodiments of this application, a communication device may perform a part of or all steps in embodiments of this application. These steps or operations are merely examples. In embodiments of this application, other operations or variations of the operations may be performed. In addition, the steps may be performed in an order different from those presented in embodiments of this application, and not all operations in embodiments of this application need to be performed.

For example, the signal sending method provided in this application may be applied to a sensing scenario, or may be applied to a positioning scenario. Certainly, the method may also be applied to a sensing or positioning-related scenario or a sensing or positioning-derived scenario. An application scenario is not specifically limited in this application. The application scenario example does not constitute any limitation on the solution of this application.

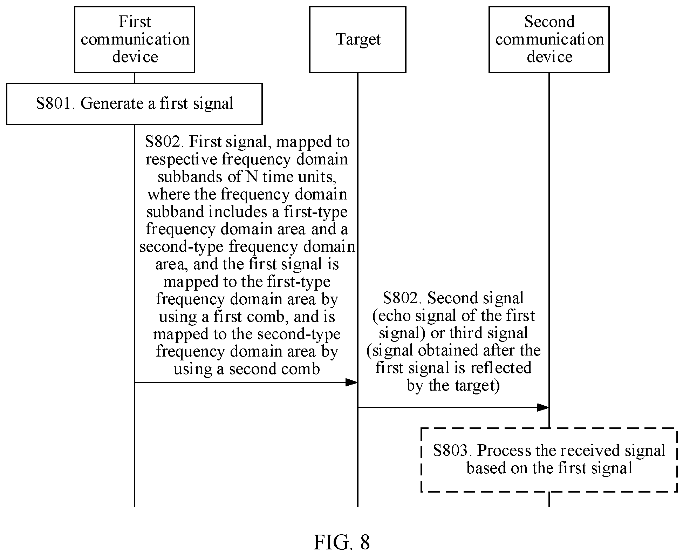

FIG. 8 is a schematic flowchart of a signal sending method according to this application. With reference to FIG. 8, the signal sending method includes the following steps.

S801. A first communication device generates a first signal.

Optionally, the first signal may be used for sensing, that is, the first signal may also be referred to as a sensing signal or a sensing reference signal, and the three may be replaced with each other. Certainly, the first signal may alternatively be another type of signal, for example, a positioning signal or a communication signal. This is not specifically limited in this application.

Optionally, the first signal may be generated based on at least one sequence. The sequence may be, for example, a ZC sequence, an m sequence, a Gold sequence, or a golay complementary pair (golay complementary pair, GCP) sequence.

For example, the first communication device may perform an operation such as discrete fourier transform (discrete fourier transform, DFT), inverse fast fourier transform (inverse fast fourier transform, IFFT), or cyclic prefix (cyclic prefix, CP) addition on the at least one sequence, to obtain the first signal.

S802. The first communication device sends the first signal. Correspondingly, a second communication device receives a signal.

The first signal is mapped to respective frequency domain subbands of N time units. N is a positive integer greater than 1.

Optionally, the time unit may be a slot, a mini-slot, a symbol, another time unit in time domain, or the like. The symbol may be an orthogonal frequency division multiplexing (orthogonal frequency division multiplexing, OFDM) symbol, a discrete fourier transform spread orthogonal frequency division multiplexing (discrete fourier transform spread orthogonal frequency division multiplexing, DFT-s-OFDM) symbol, a single-carrier orthogonal frequency division multiplexing (single-carrier orthogonal frequency division multiplexing, SC-OFDM) symbol, or an orthogonal time-frequency space (orthogonal time-frequency space, OTFS) symbol.

Optionally, the N time units may be consecutive or inconsecutive in time domain. This is not specifically limited in this application.

Optionally, a frequency domain subband of each time unit includes a plurality of frequency domain units. For example, the frequency domain unit may be a resource element (resource element, RE) or a resource block (resource block, RB). The following embodiments of this application are described by using an example that the frequency domain unit is an RE, that is, the frequency domain subband of each time unit includes a plurality of REs. The RE may also be referred to as a subcarrier, and the two may be replaced with each other.

Optionally, quantities of frequency domain units included in frequency domain subbands of different time units may be the same or may be different. This is not specifically limited in this application.

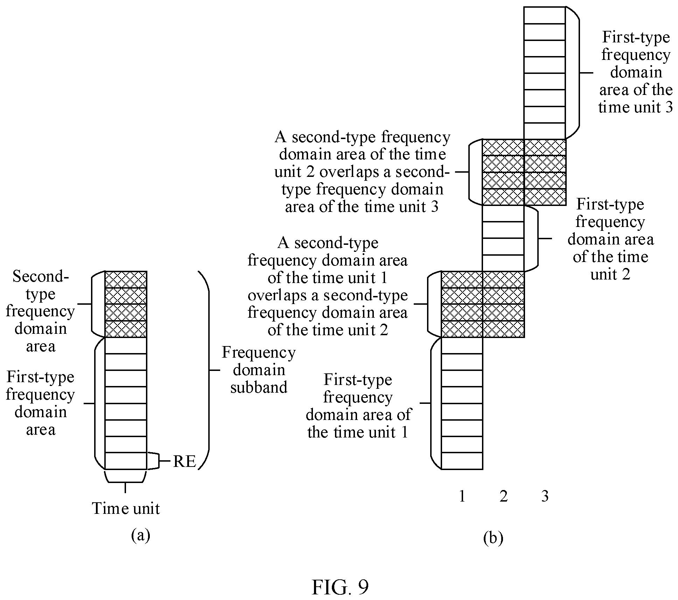

The frequency domain subband of each of the N time units includes a first-type frequency domain area and at least one second-type frequency domain area. For example, for one of the N time units, assuming that a frequency domain subband of the time unit includes a first-type frequency domain area and one second-type frequency domain area, a structure of the frequency domain subband of the time unit may be shown in (a) in FIG. 9.

Optionally, a start time unit and an end time unit in the N time units each include a first-type frequency domain area and one second-type frequency domain area, and remaining N-2 time units each include a first-type frequency domain area and a plurality of second-type frequency domain areas.

At least one second-type frequency domain area in a frequency domain subband of an i^{th} time unit in the N time units overlaps at least one second-type frequency domain area in a frequency domain subband of an (i+1)^{th} time unit. i is a positive integer from 1 to N-1.

For example, N is equal to 3. As shown in (b) in FIG. 9, a time unit 1 and a time unit 3 each include a first-type frequency domain area and one second-type frequency domain area, and a time unit 2 includes a first-type frequency domain area and two second-type frequency domain areas. The second-type frequency domain area of the time unit 1 overlaps one second-type frequency domain area of the time unit 2, and the second-type frequency domain area of the time unit 3 overlaps the other second-type frequency domain area of the time unit 2.

Optionally, if the frequency domain subband of the (i+1)^{th} time unit includes a plurality of second-type frequency domain areas, and the frequency domain area of the i^{th} time unit includes one second-type frequency domain area, it may be considered that all second-type frequency domain areas in the frequency domain subband of the i^{th} time unit overlap a part of second-type frequency domain areas in the frequency domain subband of the (i+1)^{th} time unit. For example, as shown in (b) in FIG. 9, the second-type frequency domain area in the frequency domain subband of the time unit 1 overlaps a part of second-type frequency domain areas (that is, one second-type frequency domain area) in the frequency domain subband of the time unit 2.

Optionally, the frequency domain subband of the i^{th} time unit in the N time units does not overlap a frequency domain subband of an (i+2)^{th} time unit. For example, as shown in (b) in FIG. 9, the frequency domain subband of the time unit 1 does not overlap the frequency domain subband of the time unit 3.

Optionally, a highest frequency of the frequency domain subband of the (i+1)^{th} time unit is greater than a highest frequency of the i^{th} time unit. Alternatively, a lowest frequency of the frequency domain subband of the (i+1)^{th} time unit is less than a lowest frequency of the i^{th} time unit.

The first signal is mapped to the first-type frequency domain area by using a first comb, and is mapped to the second-type frequency domain area by using a second comb, and the second comb is less than the first comb.

In other words, the first signal is mapped to the first-type frequency domain area by using a large comb, and is mapped to the second-type frequency domain area by using a small comb. The comb may also be referred to as a comb size. The comb is a positive integer greater than or equal to 1. When the comb is equal to 1, it may also be understood as continuous mapping.

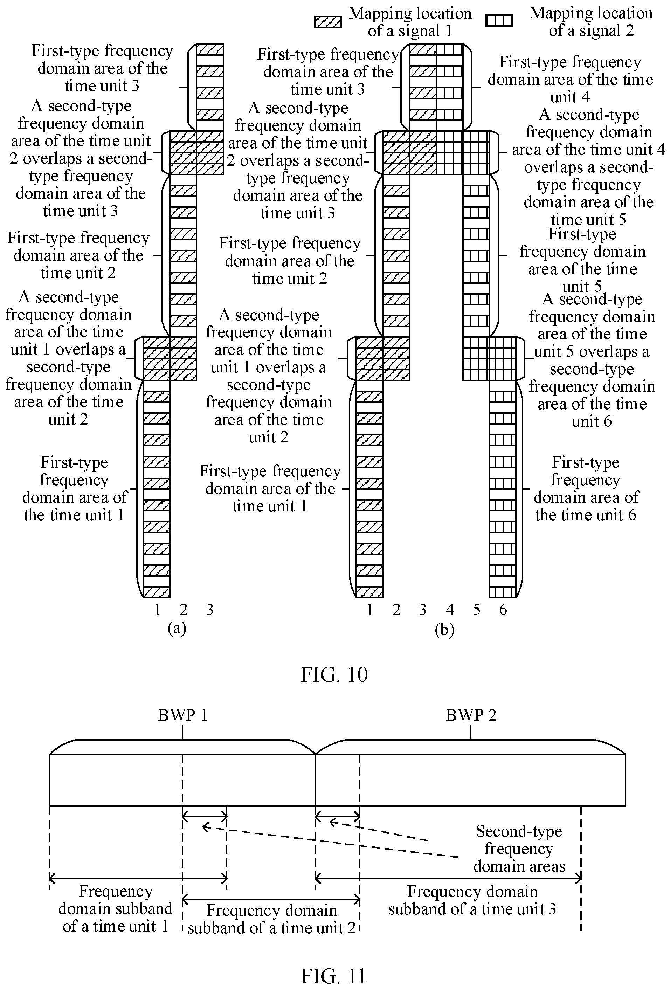

For example, N is equal to 3, the first comb is equal to 2, and the second comb is equal to 1. Mapping locations of the first signal in the three time units may be shown in (a) in FIG. 10. A part filled with slashes represents a mapping location of the first signal.

Optionally, a signal mapped to the second-type frequency domain area may be used for random phase error estimation.

It should be noted that the first-type frequency domain area in this embodiment of this application may also be referred to as a non-overlap area or a frequency hopping non-overlap area, and the second-type frequency domain area may also be referred to as an overlap area or a frequency hopping overlap area.

Optionally, the foregoing described manner of mapping the first signal to the N time units and the frequency domain subbands of the N time units may be understood as frequency hopping. For example, mapping of the signal to the frequency domain subband of the i^{th} time unit and the frequency domain subband of the (i+1)^{th} time unit may be understood as one time of frequency hopping, that is, a quantity of times of frequency hopping of the first signal is equal to N-1. For example, the implementation shown in (a) in FIG. 10 includes two times of frequency hopping.

Optionally, when the first signal is generated based on a sequence, the first signal may be generated based on N sequences. For example, an n^{th} sequence in the N sequences may be mapped to a frequency domain subband of an n^{th} time unit in the N time units, and the first signal is generated by using the N sequences mapped to the frequency domain subbands of the N time units. In other words, a signal that is in the first signal and that is mapped to the frequency domain subband of the n^{th} time unit is generated based on the n^{th} sequence. The N sequences may not be completely the same, or may be completely the same (that is, one sequence is repeatedly mapped for N times). This is not specifically limited in this application. n is a positive integer from 1 to N.

Alternatively, the first signal may be generated based on one sequence. For example, the one sequence may be divided into N subsequences, and an n^{th} subsequence in the N subsequences is mapped to the frequency domain subband of the n^{th} time unit in the N time units. The first signal is generated by using the N subsequences (or the one sequence) mapped to the frequency domain subbands of the N time units. In other words, a signal that is in the first signal and that is mapped to the frequency domain subband of the n^{th} time unit is generated based on an n^{th} subsequence of a sequence.

For the signal received by the second communication device, when the second communication device and the first communication device are a same device, the second communication device receives a second signal. The second signal may be understood as an echo signal of the first signal. When the second communication device and the first communication device are different devices, the second communication device receives a third signal. The third signal may be understood as a signal obtained after the first signal is reflected by one or more targets.

Optionally, after receiving the signal, the second communication device may perform the following step S803.

S803. The second communication device processes the received signal based on the first signal.

The received signal is the second signal or the third signal. Refer to related descriptions in step S802. Details are not described herein again.

Optionally, the second communication device may perform joint processing on signals mapped to the respective frequency domain subbands of the N time units, to obtain an equivalent received signal (that is, the second signal or the third signal) with a large bandwidth, and process the equivalent received signal.

Optionally, the processing the received signal based on the first signal may include: The second communication device processes the received signal based on a sequence (denoted as a transmitting sequence) for generating the first signal.

For example, the second communication device may sample the received signal to obtain a receiving sequence. Then, a correlation operation is performed on the transmitting sequence and the receiving sequence, to sense information such as a distance, an orientation, and a speed of the target based on a correlation operation result.

Optionally, when performing joint processing, the second communication device may further perform random phase error estimation based on a signal transmitted in the second-type frequency domain area of each time unit, and perform random phase error compensation based on an estimation result.

Based on the foregoing solution, a transmitter maps a signal to frequency domain subbands of a plurality of time units to implement frequency hopping, so that a receiver can equate signals mapped to the frequency domain subbands of the plurality of time units to a received signal with a large bandwidth. Compared with mapping a signal with a large bandwidth to a frequency domain subband of one time unit, this can reduce a requirement on a sampling rate of an ADC of the transmitter, and can adapt to a signal sending capability of a device such as a RedCap UE. In addition, a large comb is used for mapping in a first-type frequency domain area in a frequency domain subband of each time unit, and a small comb is used for mapping in an overlap area (that is, a second-type frequency domain area). Compared with using a same comb for mapping in the first-type frequency domain area and the second-type frequency domain area, this can reduce a bandwidth occupied by the overlap area, and increase an actually increased bandwidth of frequency hopping, thereby reducing a quantity of times of frequency hopping and a service (for example, sensing or positioning) delay.

The foregoing describes an overall procedure of the signal sending method provided in this application. The following describes some possible implementations in the foregoing solution.

Optionally, the frequency domain subbands of the N time units meet at least one of the following plurality of relationships:
the frequency domain subbands of the N time units belong to a same carrier;
the frequency domain subbands of the N time units belong to a same bandwidth part (bandwidth part, BWP) of a same carrier;
the frequency domain subbands of the N time units belong to a same resource pool of a same carrier;
the frequency domain subbands of the N time units belong to adjacent BWPs of a same carrier;
the frequency domain subbands of the N time units belong to adjacent resource pools of a same carrier; or
the frequency domain subbands of the N time units belong to different carriers of in-band carrier aggregation.

Optionally, when the frequency domain subbands of N time units belong to adjacent BWPs or adjacent resource pools of a same carrier, it indicates that a frequency domain subband of one or more time units is allowed to cross at least two adjacent BWPs or resource pools. Similarly, when the frequency domain subbands of the N time units belong to different carriers of in-band carrier aggregation, it indicates that a frequency domain subband of one or more time units is allowed to cross at least two adjacent carriers of in-band carrier aggregation.

For example, N is equal to 3, and the frequency domain subbands of the N time units belong to adjacent BWPs of a same carrier. As shown in FIG. 11, frequency domain subbands of a time unit 1 and a time unit 3 are respectively located in a BWP 1 and a BWP 2, and a frequency domain subband of a time unit 2 includes a part of subband located in the BWP 1 and a part of subband located in the BWP 2. There is a second-type frequency domain area in which the part of frequency domain subband of the time unit 2 located in the BWP 1 overlaps the frequency domain subband of the time unit 1, and there is a second-type frequency domain area in which the part of frequency domain subband of the time unit 2 located in the BWP 2 overlaps the frequency domain subband of the time unit 3.

In some implementation scenarios, a plurality of transmitter apparatuses may need to send signals. In this case, there may be the following two sending manners:

Manner 1: Different transmitter apparatuses send signals on frequency domain subbands of different time unit groups.

The time unit group includes a plurality of time units. For the time unit, a frequency domain subband of the time unit, and a mapping manner of the signals, refer to descriptions in step S801 and step S802. Details are not described herein again.

Optionally, two different time unit groups may be understood as follows: Time units included in the two time unit groups do not overlap in time domain.

For example, the first communication device is a UE 1, and two transmitter apparatuses are respectively the UE 1 and a UE 2. The UE 1 corresponds to a time unit group 1 (including N1 time units), and the UE 2 corresponds to a time unit group 2 (including N2 time units). To be specific, the UE 1 may send a signal 1 on frequency domain subbands of the N1 time units included in the time unit group 1, and the UE 2 may send a signal 2 in the N2 time units included in the time unit group 2.

Optionally, quantities of time units included in time unit groups corresponding to different transmitter apparatuses may be the same or may be different. For example, N1 and N2 may be the same or may be different. In addition, quantities of frequency domain units included in second-type frequency domain areas in frequency domain subbands corresponding to different transmitter apparatuses may be the same or may be different.

In a first possible implementation, a quantity of times of frequency hopping corresponding to a resource pool (for example, a sensing resource pool), a value of N (that is, a quantity of time units included in a time unit group), or a quantity of frequency domain units included in a second-type frequency domain area may be preconfigured or predefined. That is, the quantity of times of frequency hopping, the value of N, or the quantity of frequency domain units included in the second-type frequency domain area may be a preset value. In this case, quantities of time units included in time unit groups corresponding to a plurality of transmitter-apparatuses that share a same resource pool are the same, and quantities of frequency domain units included in second-type frequency domain areas are also the same.

For example, the time unit group 1 and the time unit 2 respectively corresponding to the UE 1 and the UE 2 each include three time units, and each second-type frequency domain area includes four frequency domain units. As shown in (b) in FIG. 10, the time unit group 1 includes a time unit 1, a time unit 2, and a time unit 3, and the time unit group 2 includes a time unit 4, a time unit 5, and a time unit 6. Therefore, the UE 1 performs frequency hopping on frequency domain subbands of the time unit 1, the time unit 2, and the time unit 3 to send the signal 1, and the UE 2 performs frequency hopping on frequency domain subbands of the time unit 4, the time unit 5, and the time unit 6 to send the signal 2.

It should be noted that in (b) in FIG. 10, an example that the UE 1 and the UE 2 use a same first comb and a same second comb is used for description. Certainly, different transmitter apparatuses may alternatively use different first combs and different second combs. This is not specifically limited in this application.

It should be noted that in (b) in FIG. 10, an example that a lowest frequency of the frequency domain subband of the time unit 6 is less than a lowest frequency of the frequency domain subband of the time unit 5, and the lowest frequency of the frequency domain subband of the time unit 5 is less than a lowest frequency of the frequency domain subband of the time unit 4 is used for description. In addition, a highest frequency of the frequency domain subband of the time unit 6 may be greater than a highest frequency of the frequency domain subband of the time unit 5, and the highest frequency of the frequency domain subband of the time unit 5 may be greater than a highest frequency of the frequency domain subband of the time unit 4. In this case, mapping locations of the signal 2 in the time unit 4, the time unit 5, and the time unit 6 are respectively the same as mapping locations of the signal 1 in the time unit 1, the time unit 2, and the time unit 3.

In a second possible implementation, a quantity of frequency domain units included in a second-type frequency domain area may be determined based on a signal-to-noise ratio (signal-to-noise ratio, SNR) required for random phase error estimation.

Optionally, in a monostatic scenario, during frequency hopping, different transmitter apparatuses may determine, based on SNRs required by the different transmitter apparatuses to perform random phase error estimation, quantities of frequency domain units included in second-type frequency domain areas. For example, the quantity of frequency domain units included in the second-type frequency domain area may be positively correlated to the required SNR. For example, a larger SNR required for random phase error estimation indicates a larger quantity of frequency domain units included in the second-type frequency domain area; and a smaller SNR required for random phase error estimation indicates a smaller quantity of frequency domain units included in the second-type frequency domain area.

For example, the transmitter apparatus may determine, based on the required SNR, that the second-type frequency domain area includes frequency domain units whose quantity is an integer multiple of P. P is a positive integer greater than or equal to K, and K is the first comb.

Optionally, in a bistatic scenario, a receiver apparatus may determine, based on an SNR required when the receiver apparatus performs random phase error estimation, a quantity of frequency domain units included in a second-type frequency domain area. Then, the quantity of frequency domain units included in the second-type frequency domain area may be indicated to a transmitter apparatus.

Based on the second possible implementation, the quantity of frequency domain units included in the second-type frequency domain area may be flexibly adjusted based on an actual requirement. Compared with that the second-type frequency domain area includes a fixed quantity of frequency domain units, this is more flexible. In addition, when the SNR required for random phase error estimation is low, the second-type frequency domain area may include a small quantity of frequency domain units. Compared with that the second-type frequency domain area includes a fixed large quantity of frequency domain units, this can further reduce a bandwidth occupied by the second-type frequency domain area, and increase an actually increased bandwidth of frequency hopping, thereby reducing a quantity of times of frequency hopping and a sensing (or positioning) delay.

Manner 2: Different transmitter apparatuses send signals on a frequency domain subband of a same time unit group through comb frequency division multiplexing.

For example, two transmitter apparatuses are respectively a UE 1 and a UE 2, and the time unit group includes a time unit 1, a time unit 2, and a time unit 3. The UE 1 and the UE 2 each send a signal on frequency domain subbands of the time unit 1, the time unit 2, and the time unit 3.

Optionally, different transmitter apparatuses may perform comb frequency division multiplexing in a first-type frequency domain area in the frequency domain subband of the time unit group. That is, different transmitter apparatuses use a same first comb. A quantity of transmitter apparatuses performing comb frequency division multiplexing is less than or equal to the first comb.

Optionally, for a second-type frequency domain area, when the second comb is greater than 1, different transmitter apparatuses may perform comb frequency division multiplexing in the second-type frequency domain area. When the second comb is equal to 1, a signal (or an element in a sequence) of each transmitter apparatus may need to be mapped to each frequency domain unit in the second-type frequency domain area. In this case, each transmitter apparatus may use an orthogonal cover code (orthogonal cover code, OCC) to modulate the element that originally needs to be mapped to the second-type area, to reduce interference between a plurality of transmitter apparatuses.

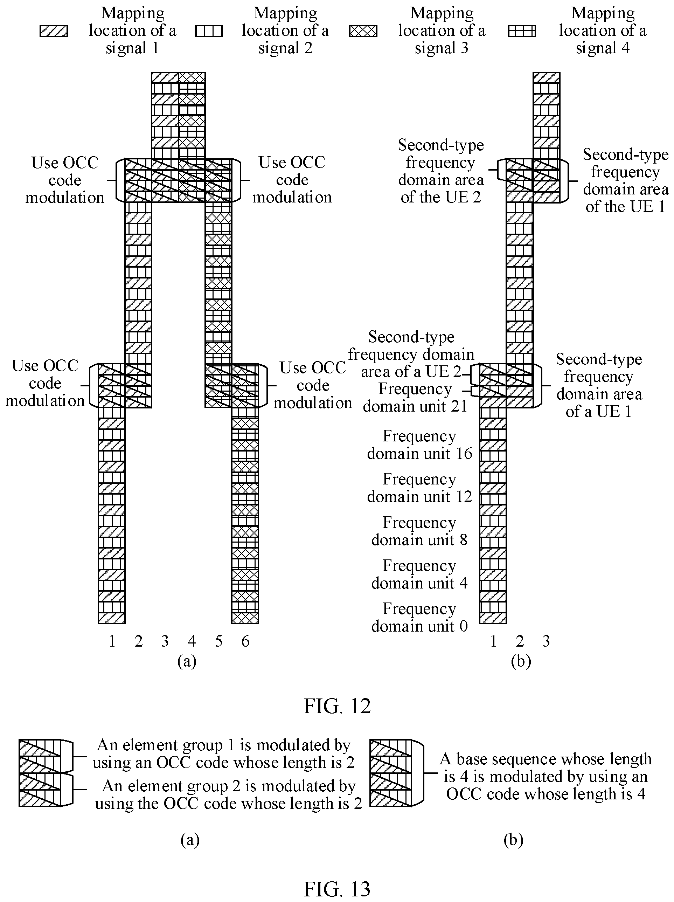

For example, two transmitter apparatuses are respectively a UE 1 and a UE 2, the UE 1 and the UE 2 respectively send a signal 1 and a signal 2, the first comb is equal to 2, and the second comb is equal to 1. As shown in (a) in FIG. 12, the UE 1 and the UE 2 perform comb frequency division multiplexing based on the comb 2 in first-type frequency domain areas of a time unit 1, a time unit 2, and a time unit 3. In a second-type frequency domain area, signals of the UE 1 and the UE 2 both need to be mapped to each frequency domain unit in the second-type frequency domain area. Therefore, the UE 1 and the UE 2 may use an OCC code to modulate elements that originally need to be mapped to the second-type area.

Optionally, for example, the first communication device is one (for example, the UE 1) of a plurality of transmitter apparatuses. When a signal that is in the first signal and that is mapped to the frequency domain subband of the n^{th} time unit in the N time units is generated based on a sequence (denoted as a sequence 1) whose length is M:

In the sequence 1, M1 elements may be mapped to a first-type frequency domain area of the n^{th} time unit, and remaining M-M1 elements are mapped to a second-type frequency domain area of the n^{th} time unit. The remaining M-M1 elements may be obtained through modulation based on a base sequence and an OCC code whose length is L. n is a positive integer from 1 to N. M, M-M1, and L are positive integers.

It should be noted that, when n has different values, corresponding M and M1 may have different values. To be specific, lengths of sequences (or subsequences) mapped to frequency domain subbands of different time units in the time unit group may be different.

In a possible implementation, a length of the base sequence may be M-M1, that is, the base sequence may include M-M1 elements. The M1 elements in the sequence 1 and the M-M1 elements in the base sequence may belong to a same sequence (denoted as a sequence 2). To be specific, the sequence 1 includes M1 elements in the sequence 2, and M-M1 elements obtained through modulation based on remaining M-M1 elements in the sequence 2 and the OCC code.

For example, M is equal to 14, and M1 is equal to 10. Assuming that the sequence 2 is [1, 2, 3, 4, 5, 6, 7, 8, 9, 10, 11, 12, 13, 14], the sequence 1 may be [1, 2, 3, 4, 5, 6, 7, 8, 9, 10, X1, X2, X3, X4]. [X1, X2, X3, X4] may be understood as four elements obtained through modulation based on [11, 12, 13, 14] and the OCC code whose length is L.

In another possible implementation, a length of the base sequence may be M-M1, that is, the base sequence may include M-M1 elements. The M1 elements in the sequence 1 and the M-M1 elements in the base sequence may not belong to a same sequence. For example, the M1 elements in the sequence 1 form one sequence, and the M-M1 elements in the base sequence form another sequence.

Optionally, the length L of the OCC code is a positive integer greater than or equal to the first comb. For example, based on the example shown in (a) in FIG. 12, the length of the OCC code is a positive integer greater than or equal to 2.

Optionally, the quantity of frequency domain units included in the second-type frequency domain area is a positive integer multiple of L, that is, the quantity of frequency domain units included in the second-type frequency domain area is greater than or equal to L. For example, based on the example shown in (a) in FIG. 12, the second-type frequency domain area includes four frequency domain units. In this case, the length of the OCC code may be, for example, 2 or 4.

Optionally, M-M1 is a positive integer multiple of L. To be specific, a quantity of elements mapped to the second-type frequency domain area is a positive integer multiple of the length of the OCC code.

Optionally, the performing modulation based on a base sequence and an OCC code whose length is L to obtain the remaining M-M1 elements of the sequence 1 may include: modulating the base sequence by using the OCC code whose length is L, to obtain the remaining M-M1 elements of the sequence 1.

For example, the modulating the base sequence by using the OCC code whose length is L may include: dividing elements of the base sequence based on the length of the OCC code to obtain at least one element group, and then modulating each element group by using the OCC code. For example, the base sequence includes M-M1 elements. The M-M1 elements may be divided into (M-M1)/L element groups, and each element group includes L elements, that is, L elements are used as one group for modulation.

Based on the example shown in (a) in FIG. 12, M-M1 is equal to the quantity 4 of frequency domain units included in the second-type frequency domain area. If the length L of the OCC code is equal to 2, as shown in (a) in FIG. 13, the base sequence whose length is 4 may be divided into two element groups, and each of the two element groups is modulated by using the OCC code whose length is 2. If the length L of the OCC code is equal to 4, as shown in (b) in FIG. 13, the base sequence whose length is 4 may be used as one element group, and the element group is modulated by using the OCC code whose length is 4.

Optionally, in Manner 2, a quantity of times of frequency hopping, a value of N (that is, a quantity of time units included in the time unit group), or a quantity of frequency domain units included in a second-type frequency domain area may be preconfigured or predefined. Alternatively, the quantity of frequency domain units included in the second-type frequency domain area may be determined by an SNR required for random phase error estimation. Refer to related descriptions in Manner 1. Details are not described herein again.

Optionally, the foregoing comb frequency division multiplexing may occur on frequency domain subbands of a plurality of time unit groups. For example, as shown in (a) in FIG. 12, not only the UE 1 and the UE 2 perform comb frequency division multiplexing on the frequency domain subband of the time unit group 1 (including the time unit 1, the time unit 2, and the time unit 3), but also two other transmitter apparatuses may perform comb frequency division multiplexing on a frequency domain subband of a time unit group 2 (including a time unit 4, a time unit 5, and a time unit 6) to respectively send a signal 3 and a signal 4. For the comb frequency division multiplexing on the frequency domain subband of the time unit group 2, refer to related descriptions of the foregoing comb frequency division multiplexing. Details are not described herein again.

It should be noted that, in (a) in FIG. 12, an example that the two time unit groups correspond to equal values in terms of the first comb, the second comb, the quantity of frequency domain units included in the second-type frequency domain area, and the length of the OCC code is used for description. Certainly, different time unit groups may correspond to different values in one or more of the first comb, the second comb, the quantity of frequency domain units included in the second-type frequency domain area, and the length of the OCC code. This is not specifically limited in this application.

Based on Manner 2, different transmitter apparatuses may perform comb frequency division multiplexing on a frequency domain subband of a same time unit group, thereby improving resource utilization. In addition, an element mapped to a second-type frequency domain area is modulated by using an OCC code, so that interference between transmitter apparatuses in the second-type frequency domain area can be reduced, thereby reducing impact of the interference between the transmitter apparatuses on random phase error estimation, and improving accuracy of random phase error estimation.

Optionally, a plurality of transmitter apparatuses performing comb frequency division multiplexing on a frequency domain subband of a same time unit group may have a same quantity or different quantities of frequency domain units included in their second-type frequency domain areas. For example, in the example shown in (a) in FIG. 12, quantities of frequency domain units included in second-type frequency domain areas of the UE 1 and the UE 2 are the same, and both are 4.

In addition, the quantities of frequency domain units included in the second-type frequency domain areas of the UE 1 and the UE 2 may alternatively be different. For example, as shown in (b) in FIG. 12, the second-type frequency domain area of the UE 1 may include four frequency domain units, that is, the UE 1 performs random phase error estimation by using signals on four frequency domain units overlapping in two times of frequency hopping; and the second-type frequency domain area of the UE 2 may include two frequency domain units, that is, the UE 2 performs random phase error estimation by using signals on two frequency domain units overlapping in two times of frequency hopping.

Optionally, a quantity of frequency domain units included in a second-type frequency domain area of each transmitter apparatus may be determined based on an SNR required for random phase error estimation. Based on the example shown in (b) in FIG. 12, an SNR required by the UE 2 to perform random phase error estimation may be less than an SNR required by the UE 1 to perform random phase error estimation.

Optionally, in respective second-type frequency domain areas of a plurality of transmitter apparatuses, each transmitter apparatus may use an OCC code to modulate an element mapped to a second-type frequency domain area. Refer to related descriptions of the foregoing OCC code modulation. Details are not described herein again.

For example, based on the example shown in (b) in FIG. 12, both the UE 1 and the UE 2 may use an OCC code whose length is 2 to modulate elements mapped to respective second-type frequency domain areas.

Optionally, for a plurality of transmitter apparatuses performing comb frequency division multiplexing on a frequency domain subband of a same time unit group, if a first-type frequency domain area of a transmitter apparatus overlaps a second-type frequency domain area of another transmitter apparatus, the transmitter apparatus may also use an OCC code to modulate an element mapped to an overlap area.

For example, based on the example shown in (b) in FIG. 12, a frequency domain unit 21 of the time unit 1 is located in a second-type frequency domain area of the UE 1, and is located in a first-type frequency domain area of the UE 2. In this case, the UE 2 may use an OCC code to modulate an element of the UE 2 that is mapped to the frequency domain unit 21.

Based on this solution, different transmitter apparatuses may perform comb frequency division multiplexing on a frequency domain subband of a same time unit group, thereby improving resource utilization. In addition, different transmitter apparatuses may flexibly adjust, based on actual requirements, quantities of frequency domain units included in second-type frequency domain areas. Compared with that the second-type frequency domain area includes a fixed quantity of frequency domain units, this is more flexible.

It may be understood that, in the foregoing embodiments, methods and/or steps implemented by the first communication device may alternatively be implemented by a component (for example, a processor, a chip, a chip system, a circuit, a logic module, or software, for example, a chip or a circuit) that may be used in the first communication device. Methods and/or steps implemented by the second communication device may alternatively be implemented by a component (for example, a processor, a chip, a chip system, a circuit, a logic module, or software, for example, a chip or a circuit) that may be used in the second communication device.

The foregoing mainly describes the solution provided in this application. Correspondingly, this application further provides a communication apparatus. The communication apparatus is configured to implement the foregoing methods. The communication apparatus may be the first communication device in the foregoing method embodiment, or an apparatus including the first communication device, or a component that can be used in the first communication device. Alternatively, the communication apparatus may be the second communication device in the foregoing method embodiment, or an apparatus including the second communication device, or a component that can be used in the second communication device.

It may be understood that, to implement the foregoing functions, the communication apparatus includes a corresponding hardware structure and/or software module for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or computer software driving hardware depends on particular applications and design constraints of technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware or a software functional module. It should be noted that, in embodiments of this application, module division is an example, and is merely a logical function division. In actual implementation, another division manner may be used.

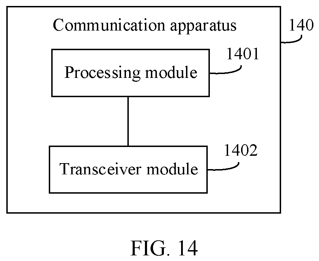

FIG. 14 is a diagram of a structure of a communication apparatus 140. The communication apparatus 140 includes a processing module 1401 and a transceiver module 1402. The communication apparatus 140 may be configured to implement a function of the first communication device or the second communication device.

In some embodiments, the communication apparatus 140 may further include a storage module (not shown in FIG. 14), configured to store program instructions and data.

In some embodiments, the transceiver module 1402 may also be referred to as a transceiver unit, and is configured to implement a sending function and/or a receiving function. The transceiver module 1402 may include a transceiver circuit, a transceiver machine, a transceiver, or a communication interface.

In some embodiments, the transceiver module 1402 may include a receiving module and a sending module, which are respectively configured to perform receiving and sending type steps performed by the first communication device or the second communication device in the foregoing method embodiments, and/or configured to support another process of the technology described in this specification. The processing module 1401 may be configured to perform processing type steps (for example, determining and generation) performed by the first communication device or the second communication device in the foregoing method embodiments, and/or configured to support another process of the technology described in this specification.

When the communication apparatus 140 is configured to implement a function of the first communication device:

The processing module 1401 is configured to generate a first signal. The transceiver module 1402 is configured to send the first signal.

The first signal is mapped to respective frequency domain subbands of N time units, and a frequency domain subband of each time unit includes a first-type frequency domain area and at least one second-type frequency domain area. At least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1. In addition, the first signal is mapped to the first-type frequency domain area by using a first comb, and is mapped to the second-type frequency domain area by using a second comb, and the second comb is less than the first comb.

Optionally, the transceiver module 1402 is further configured to receive a second signal. The second signal is an echo signal of the first signal. The processing module 1401 is further configured to process the second signal based on the first signal.

When the communication apparatus 140 is configured to implement a function of the second communication device:

The transceiver module 1402 is configured to receive a third signal. The third signal is a signal obtained after a first signal is reflected by a target. The processing module 1401 is configured to process the third signal based on the first signal.

The first signal is mapped to respective frequency domain subbands of N time units, a frequency domain subband of each time unit includes a first-type frequency domain area and at least one second-type frequency domain area, at least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1. In addition, the first signal is mapped to the first-type frequency domain area by using a first comb, and is mapped to the second-type frequency domain area by using a second comb, and the second comb is less than the first comb.

All related content of steps in the foregoing method embodiments may be cited in function descriptions of corresponding functional modules. Details are not described herein again.

In this application, the communication apparatus 140 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing function.

In a possible product form, a person skilled in the art may figure out that the communication apparatus 140 may use a form of the communication apparatus 700 shown in FIG. 7a.

In an example, a function/an implementation process of the processing module 1401 in FIG. 14 may be implemented by the processor 701 in the communication apparatus 700 shown in FIG. 7a by invoking computer-executable instructions stored in the memory 703, and a function/an implementation process of the transceiver module 1402 in FIG. 14 may be implemented by the communication interface 704 in the communication apparatus 700 shown in FIG. 7a.

In another possible product form, the communication apparatus in this embodiment of this application may alternatively be implemented by using one or more field programmable gate arrays (field programmable gate array, FPGA), a programmable logic device (programmable logic device, PLD), a controller, a state machine, gate logic, a discrete hardware component, any other proper circuit, or any combination of circuits that can perform various functions described throughout this application.

In some embodiments, when the communication apparatus 140 in FIG. 14 is a chip or a chip system, a function/an implementation process of the transceiver module 1402 may be implemented by using an input/output interface (or a communication interface) of the chip or the chip system, and a function/an implementation process of the processing module 1401 may be implemented by using a processor (or a processing circuit) of the chip or the chip system.

Because the communication apparatus 140 provided in this embodiment may perform the foregoing methods, for technical effects that can be achieved by the communication apparatus 140, refer to the foregoing method embodiments. Details are not described herein again.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store necessary program instructions and data. The processor may invoke program code stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in a memory, and may be read from the memory directly or via another component) and transmit the computer-executable instructions to the processor.

In still another possible implementation, the communication apparatus further includes a communication interface, and the communication interface is configured to communicate with a module outside the communication apparatus.

It may be understood that the communication apparatus may be a chip or a chip system. When the communication apparatus is a chip system, the communication apparatus may include a chip, or may include a chip and another discrete component. This is not specifically limited in this embodiment of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing described system, apparatus, and unit, refer to a corresponding process in the foregoing method embodiment. Details are not described herein again.

It may be understood that the system, apparatus, and method described in this application may alternatively be implemented in another manner. For example, the described apparatus embodiment is merely an example. For example, the division into the units is merely a logical function division and another division manner may be used in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, that is, may be located in one place, or may be distributed on a plurality of network units. Parts displayed as units may or may not be physical units. A part or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

All or a part of the foregoing embodiments may be implemented by using software, hardware, firmware, or any combination thereof. When implemented by using a software program, the embodiments may be implemented completely or partially in a form of a computer program product. The computer program product includes one or more computer instructions. When the computer program instructions are loaded and executed on a computer, all or a part of the procedures or functions in embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), a semiconductor medium (for example, a solid state drive (solid state drive, SSD)), or the like. In embodiments of this application, the computer may include the foregoing apparatus.

Although this application is described herein with reference to embodiments, in a process of implementing this application that claims protection, a person skilled in the art may understand and implement other variations of the disclosed embodiments by viewing the accompanying drawings, disclosed content, and the accompanying claims. In the claims, "comprising" (comprising) does not exclude another component or step, and "a" or "an" does not exclude a plural case. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and accompanying drawings are merely example descriptions of this application defined by the accompanying claims, and are considered as covering any and all modifications, variations, combinations, or equivalents within the scope of this application. It is clear that a person skilled in the art can make various modifications and variations to this application without departing from the spirit and scope of this application. Therefore, this application is intended to cover these modifications and variations of this application provided that they fall within the scope of the claims of this application and their equivalent technologies.

## Claims

1. A signal sending method, wherein the method is applied to a first communication device, and the method comprises:
generating a first signal; and
sending the first signal, wherein the first signal is mapped to respective frequency domain subbands of N time units, a frequency domain subband of each time unit comprises a first-type frequency domain area and at least one second-type frequency domain area, at least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1, wherein
the first signal is mapped to the first-type frequency domain area by using a first comb, and is mapped to the second-type frequency domain area by using a second comb, and the second comb is less than the first comb.

2. The method according to claim 1, wherein the frequency domain subband of each time unit comprises a plurality of frequency domain units, and the frequency domain subbands of the N time units meet at least one of the following plurality of relationships:
belonging to a same carrier;
belonging to a same bandwidth part BWP of a same carrier;
belonging to a same resource pool of a same carrier;
belonging to adjacent BWPs of a same carrier;
belonging to adjacent resource pools of a same carrier; or
belonging to different carriers of in-band carrier aggregation.

3. The method according to claim 1 or 2, wherein a signal that is in the first signal and that is mapped to the frequency domain subband of the i^{th} time unit is generated based on a sequence whose length is M; and
in the sequence whose length is M, M1 elements are mapped to the first-type frequency domain area, and remaining M-M1 elements are mapped to the second-type frequency domain area, wherein the M-M1 elements are obtained through modulation based on a base sequence and an orthogonal cover code whose length is L, and L is a positive integer.

4. The method according to claim 3, wherein a quantity of frequency domain units comprised in the second-type frequency domain area is a positive integer multiple of L, and/or M-M1 is a positive integer multiple of L.

5. The method according to claim 3 or 4, wherein L is a positive integer greater than or equal to the first comb.

6. The method according to any one of claims 1 to 5, wherein a value of N and/or the quantity of frequency domain units comprised in the second-type frequency domain area are/is preset values/a preset value.

7. The method according to any one of claims 1 to 6, wherein the quantity of frequency domain units comprised in the second-type frequency domain area is determined based on a signal-to-noise ratio SNR required for random phase error estimation.

8. The method according to any one of claims 1 to 7, wherein the method further comprises:
receiving a second signal, wherein the second signal is an echo signal of the first signal; and
processing the second signal based on the first signal.

9. The method according to any one of claims 1 to 8, wherein the time unit is a symbol, or the time unit is a slot.

10. The method according to any one of claims 1 to 9, wherein the first communication device is a terminal device or an access network device.

11. A signal processing method, wherein the method is applied to a second communication device, and the method comprises:
receiving a third signal, wherein the third signal is a signal obtained after a first signal is reflected by a target, the first signal is mapped to respective frequency domain subbands of N time units, a frequency domain subband of each time unit comprises a first-type frequency domain area and at least one second-type frequency domain area, at least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1, wherein the first signal is mapped to the first-type frequency domain area by using a first comb, and is mapped to the second-type frequency domain area by using a second comb, and the second comb is less than the first comb; and
processing the third signal based on the first signal.

12. A communication apparatus, wherein the communication apparatus comprises a processing module and a transceiver module;
the processing module is configured to generate a first signal; and
the transceiver module is configured to send the first signal, wherein the first signal is mapped to respective frequency domain subbands of N time units, a frequency domain subband of each time unit comprises a first-type frequency domain area and at least one second-type frequency domain area, at least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1, wherein
the first signal is mapped to the first-type frequency domain area by using a first comb, and is mapped to the second-type frequency domain area by using a second comb, and the second comb is less than the first comb.

13. The communication apparatus according to claim 12, wherein the frequency domain subband of each time unit comprises a plurality of frequency domain units, and the frequency domain subbands of the N time units meet at least one of the following plurality of relationships:
belonging to a same carrier;
belonging to a same bandwidth part BWP of a same carrier;
belonging to a same resource pool of a same carrier;
belonging to adjacent BWPs of a same carrier;
belonging to adjacent resource pools of a same carrier; or
belonging to different carriers of in-band carrier aggregation.

14. The communication apparatus according to claim 12 or 13, wherein a signal that is in the first signal and that is mapped to the frequency domain subband of the i^{th} time unit is generated based on a sequence whose length is M; and
in the sequence whose length is M, M1 elements are mapped to the first-type frequency domain area, and remaining M-M1 elements are mapped to the second-type frequency domain area, wherein the M-M1 elements are obtained through modulation based on a base sequence and an orthogonal cover code whose length is L, and L is a positive integer.

15. The communication apparatus according to claim 14, wherein a quantity of frequency domain units comprised in the second-type frequency domain area is a positive integer multiple of L, and/or M-M1 is a positive integer multiple of L.

16. The communication apparatus according to claim 14 or 15, wherein L is a positive integer greater than or equal to the first comb.

17. The communication apparatus according to any one of claims 12 to 16, wherein a value of N and/or the quantity of frequency domain units comprised in the second-type frequency domain area are/is preset values/a preset value.

18. The communication apparatus according to any one of claims 12 to 17, wherein the quantity of frequency domain units comprised in the second-type frequency domain area is determined based on a signal-to-noise ratio SNR required for random phase error estimation.

19. The communication apparatus according to any one of claims 12 to 18, wherein
the transceiver module is further configured to receive a second signal, wherein the second signal is an echo signal of the first signal; and
the processing module is further configured to process the second signal based on the first signal.

20. The communication apparatus according to any one of claims 12 to 19, wherein the time unit is a symbol, or the time unit is a slot.

21. The communication apparatus according to any one of claims 12 to 20, wherein the communication apparatus is a terminal device or an access network device.

22. A communication apparatus, wherein the communication apparatus comprises a processing module and a transceiver module;
the transceiver module is configured to receive a third signal, wherein the third signal is a signal obtained after a first signal is reflected by a target, the first signal is mapped to respective frequency domain subbands of N time units, a frequency domain subband of each time unit comprises a first-type frequency domain area and at least one second-type frequency domain area, at least one second-type frequency domain area in a frequency domain subband of an i^{th} time unit overlaps at least one second-type frequency domain area in a frequency domain subband of an (i+1)^{th} time unit, N is a positive integer greater than 1, and i is a positive integer from 1 to N-1, wherein the first signal is mapped to the first-type frequency domain area by using a first comb, and is mapped to the second-type frequency domain area by using a second comb, and the second comb is less than the first comb; and
the processing module is configured to process the third signal based on the first signal.

23. A communication apparatus, wherein the communication apparatus comprises a processor; and the processor is configured to run a computer program or instructions, to enable the communication apparatus to perform the method according to any one of claims 1 to 10, or enable the communication apparatus to perform the method according to claim 11.

24. A computer-readable storage medium, wherein the computer-readable storage medium stores computer instructions or a program, and when the computer instructions or the program is run on a computer, the method according to any one of claims 1 to 10 or the method according to claim 11 is performed.

25. A computer program product, wherein the computer program product comprises computer instructions; and when a part or all of the computer instructions are run on a computer, the method according to any one of claims 1 to 10 or the method according to claim 11 is performed.
